(19) Europäisches Patentamt
European Patent Office
Office européen des brevets

(11) **EP 3 223 971 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(21) Anmeldenummer: **15801169.2**

(22) Anmeldetag: **26.11.2015**

(51) Int Cl.:
***B21B 27/10*** *(2006.01)*

(86) Internationale Anmeldenummer:
**PCT/EP2015/077843**

(87) Internationale Veröffentlichungsnummer:
**WO 2016/083546 (02.06.2016 Gazette 2016/22)**

(54) **VORRICHTUNG UND VERFAHREN ZUM KÜHLEN EINER ROLLE**

DEVICE AND METHOD FOR COOLING A ROLL

DISPOSITIF ET PROCÉDÉ DE REFROIDISSEMENT D'UN ROULEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2014 DE 102014224318**

(43) Veröffentlichungstag der Anmeldung:
**04.10.2017 Patentblatt 2017/40**

(73) Patentinhaber: **SMS group GmbH**
**40237 Düsseldorf (DE)**

(72) Erfinder:
• **KIPPING, Matthias**
**57562 Herdorf (DE)**
• **ALKEN, Johannes**
**57076 Siegen (DE)**
• **SEIDEL, Ralf**
**35690 Dillenburg (DE)**
• **MÜLLER, Torsten**
**57223 Kreuztal (DE)**
• **TREUDE, Magnus**
**57319 Bad Berleburg (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**DE-A1-102008 050 392      DE-A1-102011 104 735**
**JP-A- S6 245 409**

**Beschreibung**

Die Erfindung betrifft eine Vorrichtung und ein Verfahren zum Kühlen einer Rolle. Bei der Rolle kann es sich um eine Walze in einem Walzgerüst zum Walzen von typischerweise metallischem Walzgut oder um eine Messrolle handeln. Die Kühlung der Rolle erfolgt unter Verwendung einer an die Rolle angestellten Kühlschale. Die Erfindung betrifft darüber hinaus ein Walzgerüst und eine Messvorrichtung mit einer derartigen Vorrichtung.

Vorrichtungen zum Kühlen einer Rolle, insbesondere einer Walze, unter Verwendung einer Kühlschale sind im Stand der Technik grundsätzlich bekannt, so z. B. aus den Schriften JP 63303609 A, DE 3616070 C2, DE 20 2010 202 340 A1, DE 10 2012 219 722 A1 und DE 10 2012 216 570 A1. Die beiden erstgenannten Druckschriften offenbaren eine Kühlvorrichtung mit einer Kühlschale zur Realisierung einer Zwangskonvektion zur Kühlung der Walze. Allen genannten Druckschriften ist gemeinsam, dass jeweils eine feste Positionierung einer Kühlschale relativ zu der jeweils zu kühlenden Walze und damit eine feste Einstellung der Größe eines Kühlspaltes zwischen der Kühlschale und der Oberfläche der zu kühlenden Walze zur Durchführung eines Kühlmittels vorgesehen ist. Für das Erzielen einer optimalen Kühlung ist es jedoch wichtig, dass die Höhe bzw. Größe des Kühlspaltes an veränderte Umgebungs- oder Prozessbedingungen angepasst wird. So werden die Walzen während Ihrer Lebensdauer mehrfach nachgeschliffen, wobei jeder Walzenabschliff typischerweise eine Nachjustierung des Kühlspaltes erforderlich macht. Die dazu notwendigen Einstellungen an den im Stand der Technik bekannten Kühlvorrichtungen bzw. Anstellvorrichtungen für die Kühlschalen werden im Stand der Technik manuell oder halbautomatisch über Stellschrauben vorgenommen. Diese Einstellungen müssen außerhalb des Walzgerüstes erfolgen, da dies im Walzgerüst aus Platz-, Zeit- und Gefahrengründen nicht möglich ist. Ebenfalls erscheint es fraglich, ob die besagten manuellen Einstellungen der Spalthöhe in dem Walzgerüst überhaupt mit einer erforderlichen Genauigkeit vorgenommen werden können. Der Oberbegriff von Anspruch 1 basiert auf der DE 10 2011 104 735 A1. Weiterhin ist festzustellen, dass die im Stand der Technik beschriebenen Kühlschalen mit den Walzeneinbaustücken verbunden, d. h. an den Lagerblöcken der Walzen befestigt sind. Dies bedeutet, dass jede Walze mit einer derartigen Kühlschale und dem entsprechenden Anstellmechanismus ausgestattet sein muss. Zum Schleifen der Walzen müssen deshalb sowohl die Walzen selbst wie auch die Einbaustücke und die anmontierten Kühlschalen abgebaut und anschließend wieder angebaut und manuell eingestellt werden. Weil im praktischen Walzbetrieb nach Möglichkeit stets ein erster Walzensatz in den Walzgerüsten eingebaut ist während mindestens ein zweiter Walzensatz in der Walzenwerkstatt vorgehalten wird, werden im Stand der Technik typischerweise auch doppelt so viele Kühlschalen mit ihren zugehörigen Anstellvorrichtungen vorgehalten, wie Walzen, die für den Walzbetrieb in einer Fertigstraße erforderlich sind.

Nachteilig an den aus den im Stand der Technik bekannten Kühlvorrichtungen, d. h. den Kühlschalen und deren Anstellvorrichtungen, ist weiterhin, dass durch ihren Anbau an die Einbaustücke der Walzen zum einen die Gewichtsverteilung zwischen dem Einlauf und dem Auslauf für das Walzgut in einem Walzgerüst ungleichmäßig wird und zum anderen sich die Steifigkeit des Gesamtsystems für eine Biegung um die Rotationsachse der Walze weiter erhöht, was sich beides nachteilig auf die Walzenbiegung auswirkt. Dies ist nachteilig für das Reibungs- und Regelverhalten der Walzen. Wenn das Kühlmedium am Ende des Kühlspaltes zwischen der Kühlschale und der zu kühlenden Walze nicht frei bzw. nicht ohne Begrenzung auslaufen kann, ist dies nachteilig für die Kühlwirkung. Durch Simulationen kann gezeigt werden, dass das Kühlmedium dann am ablaufseitigen Ende des Kühlspaltes ungewollte turbulente Querströmungen entwickeln würde, was zu einer ungleichmäßigen Kühlung und somit zu einem über die Walzenbreite ungleichmäßigen Verschleiß der Walzen führen würde. Die daraus resultierenden Durchmesserunterschiede über der Breite der Walze würden sich nicht mehr egalisieren bzw. nicht mehr ausheilen, so dass die Walze dann ein nicht gewünschtes Profil in das Walzgut einprägen würde, wodurch die Qualität des Walzgutes gemindert werden würde.

Der Erfindung liegt die Aufgabe zugrunde, eine bekannte Vorrichtung und ein bekanntes Verfahren zum Kühlen einer Rolle sowie ein bekanntes Walzgerüst und eine bekannte Messvorrichtung mit einer derartigen Vorrichtung dahingehend weiterzubilden, dass sich die Größe des Kühlspaltes, d. h. der radiale Abstand zwischen der Kühlschale und der Oberfläche der zu kühlenden Rolle, während des Betriebs der Vorrichtung stets selbsttätig optimal einstellt.

Diese Aufgabe wird im Hinblick auf die Vorrichtung durch den Gegenstand des Patentanspruchs 1 gelöst. Dieser ist dadurch gekennzeichnet, dass das einzige Lager einen Freiheitsgrad in radialer Richtung bezogen auf den kreisbogenförmigen Querschnitt der Kühlschale aufweist, so dass die Kühlschale in dem Lager in radialer Richtung frei verschiebbar gelagert ist.

Der Begriff "Rolle" meint im Rahmen der vorliegenden Erfindung beispielsweise eine Walze in einem Walzgerüst zum Walzen von Walzgut oder eine Messrolle in einer Bearbeitungsanlage für Walzgut. Die Messrolle dient typischerweise zum Erfassen einer Druck- oder Planheitsverteilung über der Breite des Walzgutes, wenn dieses die Messrolle teilweise umschlingt.

Das einzige Lager kann aus mehreren Teillagern, insbesondere zwei Hälften bestehen, welche alle dieselbe Drehachse aufweisen.

Das Lager kann als sphärisches Lager ausgebildet sein, um auch bei einer Schrägstellung der Rolle eine Parallelität von Schwenkachse der Kühlschale und Rollenachse und damit die Funktionstüchtigkeit der Vorrichtung auch in diesem Fall zu gewährleisten.

Die beanspruchte freie Verschiebbarkeit der Kühlschale in radialer Richtung bewirkt vorteilhafterweise, dass sich die Größe bzw. Höhe des Kühlspaltes zwischen der Innenseite der Kühlschale und der Oberfläche der Rolle während des Walzbetriebs in Abhängigkeit des Volumenstromes oder des Druckes, mit welchem das Kühlmedium in den Kühlspalt eingebracht wird, automatisch bzw. selbsttätig gemäß einem freien Spiel der Kräfte automatisch richtig einstellt. Dies ist zum einen optimal im Hinblick auf die zu erzielende Kühlwirkung, weil durch die freie Einstellung der Kühlspalthöhe insbesondere keine unerwünschten Turbulenzen in der Strömung des Kühlmediums in dem Kühlspalt entstehen. Weiterhin macht die freie radiale Verschiebbarkeit das Vorsehen von teuren Anstellvorrichtungen zur manuellen oder automatischen radialen Anstellung der Kühlschalen entbehrlich. Mit dem Wegfall dieser Anstelleinrichtungen entfallen auch die im Stand der Technik damit verbundenen Probleme im Hinblick auf den benötigten Raumbedarf, die für die Einstellung bzw. Anstellung benötigte Zeit und die mit der Einstellung für das Personal verbundenen Gefahren. Außerdem braucht die Genauigkeit der Einstellung der Größe des Kühlspaltes nicht mehr in Frage gestellt zu werden, denn aufgrund des freien Spiels der Kräfte stellt sich die Größe bzw. Höhe des Kühlspaltes zu jeder Zeit während des Walzbetriebs automatisch bzw. selbsttätig optimal ein.

Gemäß einem ersten Ausführungsbeispiel der Erfindung ist die Kühlschale an dem einzigen Drehgelenk frei pendelnd aufgehangen. Auch die frei pendelnde Aufhängung der Kühlschale dient, genau so wie die freie Verschiebbarkeit in radialer Richtung dazu, dass das Kühlmedium in dem Kühlspalt nur in Umfangsrichtung nicht aber in radialer Richtung zwangsgeführt wird. Der Freiheitsgrad in radialer Richtung verhindert insbesondere, wie gesagt, das Auftreten von unerwünschten turbulenten Querströmungen am Eingang und am Ausgang des Kühlspaltes und gewährleistet insofern eine stets gleichmäßige und gleich gerichtete Strömung, wodurch auch eine gleichmäßige optimale Kühlung erreicht wird. Mit der gleichmäßigen Kühlung geht - bei Einsatz der Rolle als Walze in einem Walzgerüst - eine vorteilhafte gleichmäßige Abnutzung der Walzen sowie eine gleichmäßig hohe Qualität des Walzgutes einher.

Gemäß einem weiteren Ausführungsbeispiel ist an der konvex gewölbten Außenseite der Kühlschale - optional auch über einen Hebelarm beabstandet zu der Außenseite der Kühlschale - ein Balastgewicht angebracht. Durch geeignete Dimensionierung und Verteilung der Gewichte an der Außenseite der Kühlschale in Umfangsrichtung sowie über eine geeignete Längenanpassung und Ausrichtung der Hebelarme der Balastgewichte in Bezug auf die Drehachse des Drehgelenkes kann ein gewünschtes Drehmoment eingestellt werden, welches bei Auslenkung der Kühlschale um die Drehachse des Drehgelenkes gegenüber einer Pendelruhelage entsteht. Der Begriff "Pendelruhelage" meint diejenige Lage bzw. Situation, in welcher sich die Kühlschale mit den Ballastgewichten einpendeln würde, wenn sie - freipendelnd aufgehangen - alleine der Gewichtskraft ausgesetzt wäre. Das Drehmoment repräsentiert eine bestimmte Flächenbelastung, welche auf das Kühlmittel in dem Kühlspalt einwirkt. Eine gewünschte Kühlleistung lässt sich über das Vorsehen einer bestimmten Flächenbelastung in Abhängigkeit des gegebenen Drucks oder Volumenstroms des Kühlmediums in dem Kühlspalt in gewünschter Weise einstellen.

Wichtig ist an dieser Stelle festzustellen, dass die Ballastgewichte lediglich optional und keineswegs zwingend vorzusehen sind. Die Kühlschale selber besitzt eine eigene Massenverteilung, die schon bei Herstellung der Kühlschale festgelegt wird. Alternativ zum Vorsehen der zusätzlichen Ballastgewichte kann die Massenverteilung der Kühlschale selber auch schon bei Herstellung geeignet im Hinblick auf in einem späteren Anwendungsfall gewünschtes Drehmoment ausgebildet werden.

Die erfindungsgemäße Vorrichtung weist eine Positionierungseinrichtung auf, welche an dem Lager angreift zum Positionieren des Lagers mit der daran gelagerten Kühlschale an einer vorgegebenen Position, typischerweise einer vorbestimmten Winkelposition a am Umfang der zu kühlenden Rolle. Die Winkelposition am Umfang der zu kühlenden Rolle kann grundsätzlich beliebig zwischen 0° < a < 360° gewählt werden. Die Winkelposition a hat auch Einfluss auf die Größe der Auslenkung der Kühlschale aus der Pendelruhelage und damit auf die Größe des Drehmoments und die Größe der im Walzbetrieb auf das Kühlmedium wirkenden Flächenbelastung. Je größer die Auslenkung, desto größer sind Drehmoment und die Flächenbelastung; und umgekehrt.

Die oben genannte Aufgabe der Erfindung wird weiterhin durch ein Walzgerüst gemäß Patentanspruch 8 und durch eine Messvorrichtung gemäß Anspruch 13 gelöst. Das Walzgerüst weist mindestens eine Rolle in Form einer Walze zum Walzen von Walzgut und die erfindungsgemäße Vorrichtung nach einem der vorgenannten Ansprüche auf. Die Messvorrichtung weist eine Rolle in Form einer Messrolle und eine Vorrichtung nach einem der Ansprüche 1 bis 7 auf. In beiden Fällen ist die Kühlschale an dem Umfang der Walze oder Rolle positioniert und dort in dem Lager in radialer Richtung frei verschiebbar gelagert. Die Vorteile dieser Lösungen entsprechen den oben mit Bezug auf die beanspruchte Vorrichtung genannten Vorteilen.

Gemäß einem Ausführungsbeispiel des Walzgerüstes ist das Drehgelenk, an welchem die erfindungsgemäße Vorrichtung nach einem der Ansprüche 1 bis 7 frei pendelnd aufgehangen ist, insbesondere bei einteiliger Ausbildung, über die Positionierungseinrichtung z. B. einer Traverse des Walzgerüstes, mittig zu der Walzenbreite und nicht etwa an den Einbaustücken der zu kühlenden Walze montiert. Dies bietet den Vorteil, dass zum einen das Gewicht der im Verschleißfalle auszuwechselnden Walzenanordnung, d. h. der Walze mit den Einbaustücken, nicht durch die anmontierte Kühlvorrichtung weiter erhöht ist. Weiterhin bietet der beanspruchte Montageort den Vorteil, dass keine ungleichmäßige Belastung zwischen der Einlaufseite und der Auslaufseite des Walzspaltes entsteht und dass durch eine solche deshalb hier gegebene gleichförmige Belastung auch keine negativen Auswirkungen auf die Walzenbiegung entsteht.

Alternativ kann das Lager zwei Hälften aufweisen, die - mit den im letzten Absatz beschriebenen Nachteilen - an den Einbaustücken der Rolle befestigt sind.

Bei dem Walzgerüst und/oder bei der Messvorrichtung kann das Drehgelenk, an welchem die erfindungsgemäße Vorrichtung nach einem der Ansprüche 1 bis 7 frei pendelnd aufgehangen ist, als dieses sphärische Gelenk ausgebildet sein. Die sphärische Ausbildung bietet den Vorteil, dass die durch das Drehgelenk an der Antriebs- und Bedienseite gebildete Schwenkachse der Kühlschale auch bei einer Schräganstellung der Walze in dem Walzgerüst oder der Messrolle immer parallel zur Walzen- oder Messrollenachse bleiben würde. Die Kühlschale würde dann insofern der Walze oder der Messrolle folgen und die Funktion der Kühlschale wäre auch bei einer Schrägstellung der Walze oder der Messrolle immer gewährleistet.

Die oben genannte Aufgabe wird weiterhin durch das in Patentanspruch 17 beanspruchte Verfahren gelöst. Auch die Vorteile dieses Verfahrens entsprechen den oben mit Bezug auf die beanspruchte Vorrichtung und das beanspruchte Walzgerüst genannten Vorteilen.

Weitere vorteilhafte Ausgestaltungen der erfindungsgemäßen Vorrichtung, des erfindungsgemäßen Walzgerüstes, der Messvorrichtung oder des erfindungsgemäßen Verfahrens sind Gegenstand der abhängigen Ansprüche.

Der Beschreibung sind 5 Figuren beigefügt, wobei

Figur 1    einen Querschnitt durch die erfindungsgemäße Vorrichtung und das erfindungsgemäße Walzgerüst;

Figur 2    eine Ergänzung zu Figur 1;

Figur 3    ein weiteres Ausführungsbeispiel zur Anordnung der erfindungsgemäßen Kühlschale am Umfang einer Walze;

Figur 4    eine erste Ausführungsform des einzigen Lagers für die Kühlschale; und

Figur 5    eine zweite Ausführungsform des einzigen Lagers für die Kühlschale zeigt.

Die Erfindung wird nachfolgend in Form von Ausführungsbeispielen unter Bezugnahme auf die genannten Figuren detailliert beschrieben. In allen Figuren sind gleiche technische Elemente mit gleichen Bezugszeichen bezeichnet.

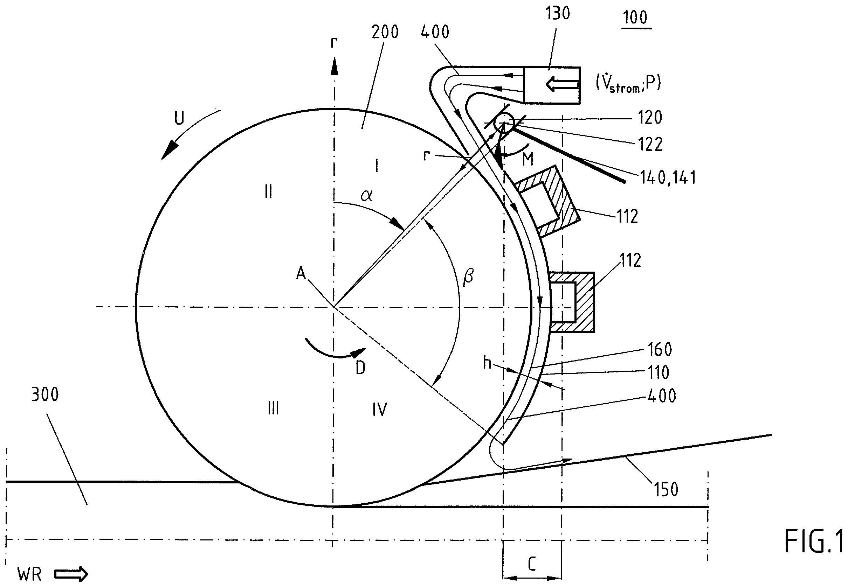

Figur 1 zeigt einen Querschnitt durch das erfindungsgemäße Walzgerüst. Von dem Walzgerüst ist lediglich eine Rolle in Form einer Walze 200 gezeigt zum Walzen von Walzgut 300. Die Walze dreht sich in der Drehrichtung D. Der Walze ist auf ihrer rechten Seite eine erfindungsgemäße Vorrichtung 100 zugeordnet. Konkret umfasst die Vorrichtung 100 eine Kühlschale mit einem Querschnitt in Form eines Abschnitts eines Kreisbogens zum Abdecken eines Oberflächenbereichs der Walze 200. Im Bereich des oberen Randes der Kühlschale 110 ist ein Lager 120 mit einem Drehgelenk angeordnet. Das Lager ist so ausgerichtet, dass seine Drehachse 122 senkrecht zu dem kreisförmigen Querschnitt der Kühlschale 110 und parallel zur Rotationsachse A der Walze 200 verläuft. An diesem einzigen Drehgelenk 120 ist die Kühlschale 110 frei pendelnd aufgehangen. Das einzige Lager mit dem Drehgelenk, in dem die Kühlschale drehbar gelagert ist, weist einen Freiheitsgrad in radialer Richtung r bezogen auf den kreisförmigen Querschnitt der Kühlschale oder bezogen auf die Rotationsachse A der Walze 200 auf, so dass die Kühlschale in dem Lager 120 in radialer Richtung r frei verschiebbar gelagert ist. Das Lager ist insofern nicht nur als Drehgelenk, sondern auch als Schiebelager ausgebildet.

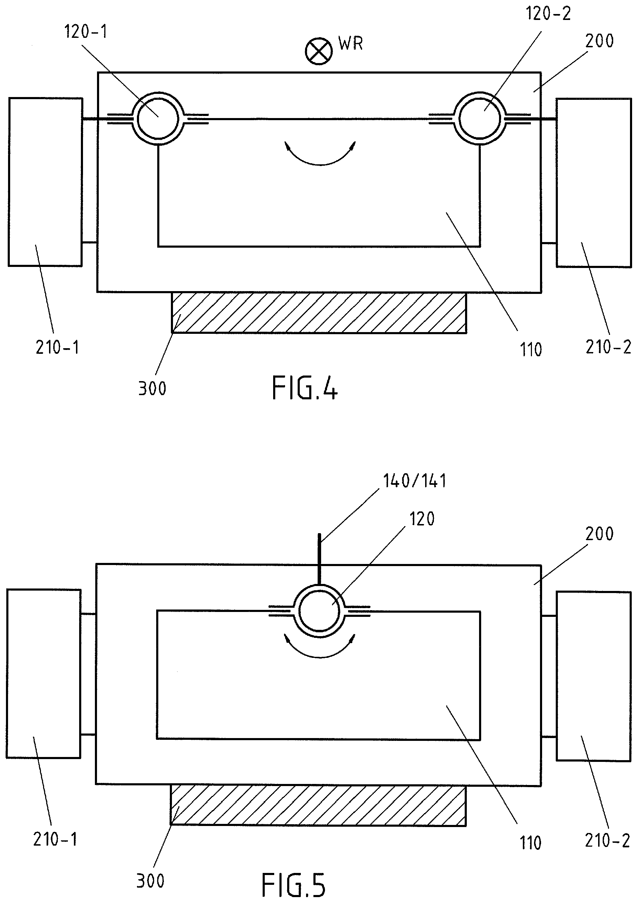

Figur 4 zeigt eine erste Ausführungsform für das einzige Lager 120 der Kühlschale, wobei dieses aus zwei Lagerhälften 120-1, 120-2 besteht, die jeweils an einem der Einbaustücke, d. h. an einem der Lagergehäuse 210-1, 210-2 der Rolle 200 befestigt sind. Dies hat dann zwar den Nachteil, dass die Gewichtsverteilung über die Mittelachse A der kompletten Rolle 200 nicht im Gleichgewicht ist. Die Rolle wird aber erfindungsgemäß dennoch nicht ausgestreift, da die Lagerhälften kein Biegemoment übertragen müssen, sondern sich frei einstellen können.

Figur 5 zeigt eine zweite Ausführungsform für das einzige Lager 120, wobei das Lager mittig an der Kühlschale 110 angebracht ist. Das Lager ist mit Hilfe einer Positioniereinrichtung 140, beispielsweise in Form eines Gelenk- oder Schwenkarms 141, z. B. an einer Traverse des Walzgerüstes mittig zu der Rolle 200 montiert bzw. aufgehangen.

Bei sphärischer Ausbildung des Lagers 120 bzw. der Lagerhälften kann bei beiden Ausführungsformen die Drehachse des Lagers bzw. der Kühlschale 110 einer Schrägstellung der Rolle folgen, so dass auch in diesem Fall die Drehachse der Kühlschale parallel zur Rotationsachse der Rolle bleibt. Die dafür erforderliche Schwenkbewegung bzw. Auslenkung des Lagers ist in den Figuren 4 und 5 durch einen bogenförmigen Doppelpfeil symbolisiert.

Das Lager bzw. das Drehgelenk ist bei beiden Ausführungsformen in einer beliebigen Winkelposition a am Umfang U der Walze positionierbar.

Entweder am oberen Rand der Kühlschale, wie in Figur 1 gezeigt, oder am unteren Rand der Kühlschale 110 ist eine Düseneinrichtung vorgesehen zum Einspritzen eines Kühlmediums 400 in einen Kühlspalt zwischen der Innenseite der Kühlschale 110 und der Mantelfläche der Walze 200. An welcher Seite bzw. an welchem Rand der Kühlschale 110 die Düseneinrichtung 130 das Kühlmedium 400 in den Kühlspalt einspeist, hängt von der Drehrichtung D der Walze und der Frage ab, ob eine Gegenstromkühlung oder eine Mitstromkühlung gewünscht ist; in letztgenanntem Fall strömt das Kühlmedium 400 in Umfangs- und Drehrichtung D der Walze 200.

An dem der Einspeisung des Kühlmediums gegenüberliegenden Rand der Kühlschale weist diese vorteilhafterweise keinerlei Begrenzung, insbesondere keinen Sammelbehälter für das Kühlmedium auf, so dass ein ungehinderter kräftefreier Abfluss des Kühlmediums dort gewährleistet ist. Dies ist vorteilhaft für das im nächsten Absatz erwähnte freie Spiel der Kräfte.

Das Kühlmedium 400 wird von der Düseneinrichtung 130 entweder mit einem vorgegebenen Volumenstrom $\dot{V}_{Strom}$ oder einem vorgegebenen Druck P in den Kühlspalt hineingepresst. Aufgrund des in radialer Richtung frei beweglich frei gelagerten Drehgelenks 120 stellt sich bei freiem Spiel der Kräfte die Höhe h des Kühlspaltes 160 automatisch bzw. selbsttätig optimal ein. Aufgrund der frei pendelnden Aufhängung der Kühlschale in dem Drehgelenk 120 stellt sich die Höhe h des Kühlspaltes nicht nur auf Höhe des Drehgelenkes, sondern überall im Winkelbereich β der Kühlschale automatisch bzw. selbständig richtig ein. Ein manuelles oder automatisches festes einstellen der Höhe h wird damit entbehrlich.

Die sich einstellende Höhe h des Kühlspaltes ist, wie gesagt, vom freien Spiel der Kräfte abhängig. Konkret wird die Spalthöhe durch folgende physikalische Größen beeinflusst: Von dem Volumenstrom oder dem Druck des Kühlmediums 400 in dem Kühlspalt und von dem Drehmoment bzw. der daraus resultierenden Flächenbelastung, welches/welche die Kühlschale, eventuell mit daran befestigten Balastgewichten, im Walzbetrieb bei Auslenkung um die Drehachse 122 des Drehgelenkes 120 auf das Kühlmedium ausübt. Mathematisch ausgedrückt gilt folgender Zusammenhang:

$$h = f\left[1/(m*g); 1/C; \dot{V}_{Strom}; P\right] \tag{1}$$

wobei gilt:

| | |
|---|---|
| h: | Spalthöhe |
| f: | funktionaler Zusammenhang |
| m: | Gesamtmasse der Kühlschale mit Ballastgewichten bzw. entsprechende Massenverteilung |
| g: | Gravitationskonstante |
| C: | Hebelarm der Kühlschale bei Auslenkung aus Pandelruhelage |
| $\dot{V}_{Strom}$ | Volumenstrom des Kühlmediums |
| P: | Druck des Kühlmediums |

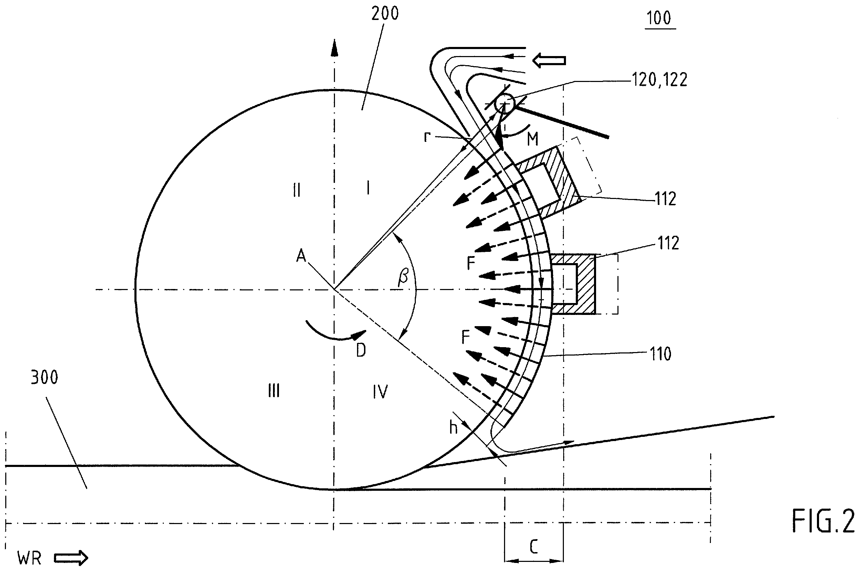

Das Drehmoment der Kühlschale 110 mit den Ballastgewichten 112 hängt ab von der Verteilung der Ballastgewichte 112 am konvexen Außenumfang der Kühlschale 110 und deren Abstand von der konvexen Außenseite der Kühlschale 110. Je größer die Ballastgewichte und je größer deren Abstand von der Außenseite der Kühlschale 110 sind, desto größer ist das Drehmoment und damit auch die Kraft bzw. die Flächenbelastung, mit welchem/welcher die Kühlschale auf die Walze bzw. das Kühlmedium 400 in dem Kühlspalt drückt; dieser Zusammenhang ist in Figur 2 anschaulich dargestellt. Die gestrichelten Linien symbolisieren die größere Kraft bzw. Momentenwirkung bei weiter außen angebrachten Belastungsgewichten 112 im Vergleich zu weiter innen liegenden Ballastgewichten (nicht gestrichelte Linien).

Idealerweise ist das Lager 120 als Schiebelager mit einem darin radial frei verschiebbarem Drehgelenk zur frei pendelnden Aufhängung der Kühlschale ausgebildet. Bei dieser idealtypischen Lagerung wäre die Positionierung des Lagers in einer bestimmten Winkelposition a am Umfang der Walze fest.

In der Praxis genügt es in der Regel, wenn die Positionierung der Walze in Umfangsrichtung U lediglich näherungsweise konstant ist; d. h. kleinere Schwankungen in der Winkelposition sind in der Regel tolerabel. Unter dieser Voraussetzung kann das Lager 120 dadurch realisiert sein, dass das Drehgelenk an der Positionierungseinrichtung 140, die in einer Ebene quer zur Drehachse der Walze 200 schwenkbar ist, befestigt ist. Von der Positionierungseinrichtung ist in Figur 1 lediglich ein Hebel 141 gezeigt, an dessen einem Ende das Drehgelenk 120 angeordnet ist und dessen anderes Ende z. B. an einem fest Drehpunkt gelagert ist. Die so ausgebildete Positionierungseinrichtung 140 zwingt dann das Drehgelenk 120 auf eine Kreisbahn mit zumindest einer Komponente in radialer Richtung der Walze 200. In dieser radialen Richtung muss das Drehgelenk zumindest während des Walzbetriebs frei beweglich sein, notfalls auch bei Akzeptanz von leichten Schwankungen in der Winkelposition a. Insofern gewährleistet die schwenkbare Positioniereinrichtung 140 bei der beschriebenen Ausführungsform den Freiheitsgrad des Lagers 120 in radialer Richtung. Die Positionierungseinrichtung 140 kann einen in Figur 1 nicht dargestellten Antrieb aufweisen zum Positionieren des Drehgelenkes in eine Anfangsposition vor und zu Beginn des Kühlbetriebs. Dieser Antrieb kann mechanisch, elektromechanisch, pneumatisch oder hydraulisch erfolgen. Der Antrieb kann entweder innerhalb oder außerhalb des Walzgerüstes angeordnet sein. In der Anfangsposition muss aber - spätestens mit Beginn des Walz- und Kühlbetriebs - die radiale frei Verschiebbarkeit gewährleistet sein bzw. zugelassen werden.

Die Krümmung der Kühlschale 110 entspricht vorzugsweise der Krümmung der Walze 200, so dass die Mittelpunktachse der gekrümmten Kühlschale 110 vorzugsweise mit der Rotationsachse der Walze 200 zusammenfällt, wie dies in Figur 1 durch die punktierten Linien und den Winkel β angedeutet ist.

Weiterhin ist in der Figur 1 zwischen dem unteren Ende der Kühlschale 110 und dem Walzgut 300 ein Abstreifer 150 angeordnet. Dieser Abstreifer 150 schützt die Bauteile über ihm, d. h. insbesondere die erfindungsgemäße Kühlvorrichtung 100 vor Einflüssen des Walzgutes 300. Weiterhin sorgt der Abstreifer dafür, dass das Walzgut 300 von der Walze 200 abgeleitet und in Walzrichtung WR weitergeleitet wird.

Alternativ zur Ausbildung der Rolle als Walze in einem Walzgerüst kann die Rolle auch als Messrolle ausgebildet sein, auf deren Oberfläche dann Sensoren, typischerweise Drucksensoren angeordnet sind. Eine solche Messrolle kann zum Beispiel in einem Rollgang hinter einer Walzstraße montiert sein. Während des Betriebs kann die Messrolle teilweise von heißem Walzgut umschlungen werden, wodurch die Sensoren eventuell zu stark aufgeheizt werden. Die erfindungsgemäße Vorrichtung kann dann zur Kühlung der Sensoren am Umfang der Messrolle positioniert werden. Auf diese Weise kann an den Sensoren ein Temperaturbereich eingestellt werden, der die Sensoren nicht beeinträchtigt.

Die erfindungsgemäße Kühlvorrichtung zur Kühlung einer Walze in einem Walzgerüst oder zur Kühlung einer Messrolle funktioniert wie folgt:

Während des Walzbetriebs oder des Betriebs der Messrolle wird das Kühlmedium 400 mit Hilfe der Düseneinrichtung 130 mit einem vorgegebenen Druck P oder einem vorgegebenen Volumenstrom $\dot{V}_{Strom}$, wie in Figur 1 gezeigt, in den Kühlspalt 160 eingespeist. Aufgrund der Lagerung der Kühlschale 110 an dem Drehgelenk 120 mit freier Verschiebbarkeit in radialer Richtung r stellt sich dann die Höhe h des Kühlspaltes nicht nur im Bereich des Drehgelenkes 120, sondern über den gesamten Winkelbereich β der Kühlschale 110 überall optimal ein. Optimal bedeutet entsprechend dem freien Spiel der Kräfte und Momente. Beteiligt an diesem freien Spiel der Kräfte sind insbesondere die von der Kühlschale 110 auf das Kühlmedium im Kühlspalt einwirkende Kraftverteilung im Winkelbereich β, wie in Figur 2 gezeigt. Die Größe dieser Kraftverteilung ist, wie gesagt, abhängig von der Masseverteilung der Kühlschale selber und - sofern vorhanden - der Größe der Ballastgewichte 112, deren Verteilung am äußeren Umfang der Kühlschale 110 und deren Abstand von der Außenseite der Kühlschale. Die Größe des daraus resultierenden Drehmoments hängt auch von der Winkelposition a der Drehachse des Drehgelenks 120 am Umfang der Walze ab, denn danach richtet sich die Größe des Hebelarms C, welcher den Abstand zwischen der Schwerelinie der Kühlschale 110, wenn diese frei pendelnd an dem Drehgelenk 120 aufgehangen ist (linke strichpunktierte Linie in den Figuren 1 und 2) und bei Auslenkung der belasteten Kühlschale aufgrund der Walze 200 und dem Kühlmedium 400 im Kühlspalt; siehe rechte strichpunktierte Linie in den Figuren 1 und 2. Die Größe des Hebelarms C wird im Wesentlichen durch die Position des Drehgelenks 120 am Umfang der Walze 200 beeinflusst.

Die besagten radialen Kräfte aufgrund des Drehmoments der Kühlschale 110 wirken zum Mittelpunkt bzw. zur Rotationsachse der Rolle bzw. Walze 200 hin. Gleichermaßen wird die Kühlschale 110 auch von dem in dem Kühlspalt 160 fließenden Kühlmedium 400 zur Rotationsachse der Rolle bzw. der Walze hin angezogen, weil im Kühlspalt aufgrund des fließenden Mediums 400 ein Unterdruck herrscht. Die beiden besagten zur Rotationsachse der Rolle bzw. der Walze hinweisenden Kraftverteilungen werden in ihrer Gesamtheit kompensiert durch eine Reactio-Kraftverteilung, die durch das Kühlmedium im Kühlspalt aufgebracht wird, denn das Kühlmedium im Kühlspalt lässt sich grundsätzlich nicht komprimieren und dem durch die Düseneinrichtung 130 vorgegebenen Volumenstrom oder Druck des Kühlmediums muss Rechnung getragen werden. Insofern verhindert die radiale Reactio-Kraftverteilung, dass die Höhe des Kühlspaltes zu "0" wird.

Die Kühlschale 110 besitzt aufgrund der optional und variabel positionierbaren Ballastgewichte eine einstellbare Charakteristik bezüglich ihrer Massenverteilung und damit des von ihr ausgeübten Drehmomentes. Konkret sind die Ballastgewichte 112 in ihrer Größe variabel und in ihrer Verteilung an der konvexen Außenseite der Kühlschale frei positionierbar. Auch das Bogenmaß β kann geeignet gewählt werden. Aus dem Zusammentreffen der Kühlschalen-Massenverteilungscharakteristik mit dem vorgegebenen Volumenstrom bzw.

Druck des Kühlmediums 400 durch die Düsenvorrichtung 130 ergibt sich automatisch eine bestimmte Größe h des Kühlspaltes 160. Das Zusammentreffen der beschriebenen Parameter führt dazu, dass die Kühlschale 110 durch die sich einstellenden Druckverhältnisse im Kühlmedium-durchströmten Kühlspalt 160 ein Anhaften der Kühlschale am Kühlmedium 400 bzw. an der Walze 200 bewirkt. Aus der Gleichung 1 wird deutlich, dass die Höhe h des Kühlspaltes durch Variation der Massenverteilung der Ballastgewichte 112 und der Winkelposition a beeinflussbar ist. Konkret bewirken größere Ballastgewichte bzw. größere Drehmomente eine höhere Flächenlast, die letztes Endes von dem Strom des Kühlmediums 400 im Kühlspalt 160 getragen werden muss. Der Volumenstrom $\dot{V}_{Strom}$ oder der Druck P des Kühlmediums 400 der Düseneinrichtung 130 in Prozessgrößen dient vorbestimmten Grenzen von einer übergeordneten Steuerung des Walzprozesses dem Kühlprozess zur Verfügung gestellt werden.

Konkret ist die jeweils gewünschte Wärmeleistung, repräsentiert durch den sogenannten Wärmeübergangswert a, abhängig von der Höhe h des Kühlspaltes 160 und dem Volumenstrom des Kühlmediums 400 in dem Kühlspalt 160.

Bei vorgegebener gewünschter Kühlleistung bzw. vorgegebenem Wärmeübergangswert a und bei weiterhin durch die Düseneinrichtung 130 vorgegebenem Druck oder Volumenstrom des Kühlmediums lässt sich das dafür erforderliche Drehmoment der Kühlschale 110 um die Drehachse 122 berechnen. Konkret ergibt sich dann das notwendige Drehmoment als Integral der Druckverteilung des Kühlmediums 400 im Kühlspalt 160 multipliziert mit der Fläche der Kühlschale 110 integriert über den Abstand zum Aufhängepunkt d. h. zur Drehachse 122 des Lagers 120.

Die erfindungsgemäß vorgeschlagene Kühlvorrichtung bietet den Vorteil, dass sich die Höhe h des Kühlspaltes 160 in radialer Richtung selbständig optimal einstellt und dass die Kühlschale auf der Rolle bzw. der Walze aufschwimmt bzw. durch die Strömungs- und Druckverhältnisse des Kühlmediums 400 im Kühlspalt an der Walze haftet. Die so betriebene Kühlvorrichtung bewirkt eine gleichmäßige Kühlung in Umfangsrichtung und über die Breite der Walze.

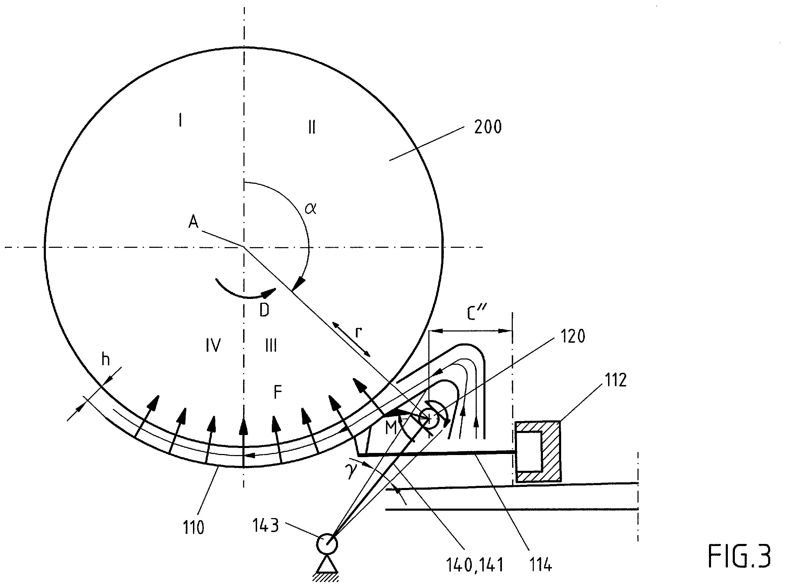

Figur 3 zeigt ein weiteres Ausführungsbeispiel zur Positionierung der erfindungsgemäßen Kühlvorrichtung 100 am Umfang der Walze 200.

Konkret zeigt Figur 3 ein Ausführungsbeispiel der erfindungsgemäßen Vorrichtung 100, bei welchem die Kühlschale an der Unterseite der Walze 200 angeordnet ist zur Kühlung der Walze im Bereich der Quadranten III und IV. Auch hier ist das Drehlager 120 an einer Positionierungseinrichtung 140 befestigt, welche im Wesentlichen einen Hebelarm 141 aufweist, welcher um einen Schwenkpunkt 143 schenkbar gelagert ist. Die Positionierungseinrichtung 140 ist so ausgebildet, dass sie ein Schwenken des Schwenkarms 114 zumindest in einem Winkelbereich γ gestattet, wodurch eine freie Verschiebbarkeit des Drehgelenks 120 in radialer Richtung r ermöglicht wird.

Auch bei diesem Ausführungsbeispiel ist die Kühlschale 110 frei pendelnd an dem Drehlager 120 aufgehangen; allerdings ist das Ballastgewicht 112 im vorliegenden Fall über den Hebelarm 114 derart in Bezug auf die Drehachse 122 des Drehgelenks 120 angeordnet, dass die Kühlschale 110 insgesamt mit einer Flächenlast F bzw. einem Drehmoment M gegen die Unterseite der Walze 200 drückt und nicht etwa in eine Schwerelinie in Richtung der Gewichtskraft , d. h. in die Pendelruhelage fällt.

Bezugszeichenliste

| | |
|---|---|
| 100 | Vorrichtung |
| 110 | Kühlschale |
| 112 | Ballastgewicht |
| 114 | Hebelarm |
| 120 | Lager, insbesondere Drehgelenk |
| 120-1 | Lagerhälfte |
| 120-2 | Lagerhälfte |
| 122 | Drehachse |
| 130 | Düseneinrichtung |
| 140 | Positionierungseinrichtung |
| 141 | Schwenkarm |
| 143 | Schenkpunkt |
| 150 | Abstreifer |
| 160 | Kühlspalt |
| 200 | Rolle, insbesondere Walze |
| 210-1 | Einbaustück |
| 210-2 | Einbaustück |
| 300 | Walzgut, Metallband |
| 400 | Kühlmedium |
| h | Größe/Höhe des Kühlspalts |
| r | radiale Richtung |
| D | Drehrichtung |
| F | Flächenlast |
| M | Drehmoment |
| U | Umfangsrichtung |
| A | Rotationsachse der Rolle |
| C | Hebelarm |
| $\dot{V}_{Strom}$ | Volumenstrom des Kühlmediums |

P      Druck des Kühlmediums

a      Wärmeübergangswert

a      Winkelposition

β      Winkelbereich der Kühlschale

WR    Walzrichtung

I, II, III, IV    Quadranten des Rollenquerschnitts

**Patentansprüche**

1. Vorrichtung (100) zum Kühlen einer Rolle (200), aufweisend:

    eine Kühlschale (110) mit einem Querschnitt in Form eines Abschnitts eines Kreisbogens zum Abdecken eines Oberflächenbereichs der Rolle (200), wobei im Bereich eines Randes der Kühlschale ein einziges Lager (120) mit einem Drehgelenk mit einer senkrecht zu dem kreisbogenförmigen Querschnitt verlaufenden Drehachse (122) ausgebildet ist zum Schwenken der Kühlschale (110) um die Drehachse;
    **dadurch gekennzeichnet, dass**
    das einzige Lager (120) einen Freiheitsgrad in radialer Richtung (r) bezogen auf den kreisbogenförmigen Querschnitt der Kühlschale (110) aufweist, so dass die Kühlschale in dem Lager (120) in radialer Richtung (r) frei verschiebbar gelagert ist.

2. Vorrichtung (100) nach Anspruch 1,
    **dadurch gekennzeichnet, dass**
    die Kühlschale (110) an dem Drehgelenk des einzigen Lagers (120) frei pendelnd aufgehangen ist.

3. Vorrichtung (100) nach einem der vorangegangenen Ansprüche;
    **dadurch gekennzeichnet, dass**
    an der konvex gewölbten Außenseite der Kühlschale (110) - optional auch über einen Hebelarm (114) beabstandet zu der Außenseite - ein Ballastgewicht (112) angebracht ist.

4. Vorrichtung nach Anspruch 3,
    **dadurch gekennzeichnet, dass**
    der Hebelarm (114) und das Ballastgewicht (112) so ausgelegt und angeordnet sind, dass sich im Zusammenwirken mit der Massenverteilung der Kühlschale (110) bei einer vorbestimmten Auslenkung der Kühlschalen-Ballastgewicht-Kombination aus einer Pendelruhelage ein gewünschtes Drehmoment um die Drehachse (122) des Drehgelenks einstellt.

5. Vorrichtung (100) nach einem der vorangegangenen Ansprüche,
    **gekennzeichnet durch**
    eine Düseneinrichtung (130) zum Einspritzen eines Kühlmediums (400) mit einem vorgegebenen Druck oder Volumenstrom im Wesentlichen tangential an die konkav gewölbte Innenseite der Kühlschale (110).

6. Vorrichtung (100) nach einem der vorangegangenen Ansprüche,
    **gekennzeichnet durch**
    eine Positionierungseinrichtung (140), welche an dem Lager (120) angreift, zum Positionieren des Lagers mit der daran radial verschiebbar gelagerten Kühlschale (110) an einer vorgegebenen Position (α).

7. Vorrichtung (100) nach einem der vorangegangenen Ansprüche,
    **dadurch gekennzeichnet, dass**
    das Lager (120) als sphärisches Lager ausgebildet ist.

8. Walzgerüst aufweisend:
    mindestens eine Rolle in Form einer Walze (200) zum Walzen von Walzgut (300); und eine Vorrichtung (100) nach einem der vorangegangenen Ansprüche, wobei die Kühlschale (110) an dem Umfang der Walze (200) in dem Lager (120) in radialer Richtung (r) frei verschiebbar gelagert ist.

9. Walzgerüst nach Anspruch 8,
**dadurch gekennzeichnet, dass**
die Vorrichtung (100) in dem Drehgelenk des einzigen Lagers (120) frei pendelnd an dem Umfang der Walze (200) gelagert ist.

10. Walzgerüst nach Anspruch 8 oder 9,
**dadurch gekennzeichnet, dass**
die Vorrichtung (100) mit Hilfe der Positionierungseinrichtung (140) an einer Winkelposition a der Drehachse (122) des Drehgelenks (120) in Umfangsrichtung (U) gelagert ist.

11. Walzgerüst nach einem der Ansprüche 8 bis 10,
**dadurch gekennzeichnet, dass**
das Lager (120), an welchem die Vorrichtung gemäß der Ansprüche 1 bis 7 frei pendelnd aufgehangen ist, an dem Walzgerüst montiert ist.

12. Walzgerüst nach einem der Ansprüche 8 bis 10,
**dadurch gekennzeichnet, dass**
das Lager (120), an welchem die Vorrichtung gemäß der Ansprüche 1 bis 7 frei pendelnd aufgehangen ist, in Form von zwei Hälften ausgebildet ist, die an den Einbaustücken der Rolle montiert sind.

13. Messvorrichtung mit:

einer Rolle in Form einer Messrolle, auf deren Oberfläche Sensoren, beispielsweise Drucksensoren angeordnet sind zum Erfassen einer Druck- oder Planheitsverteilung in Breitenrichtung von Walzgut, welches die Messrolle teilweise umschlingt; und
einer Vorrichtung nach einem der Ansprüche 1 bis 7, wobei die Kühlschale (110) an dem Umfang der Rolle (200) in dem Lager (120) in radialer Richtung (r) frei verschiebbar gelagert ist.

14. Messvorrichtung nach Anspruch 13,
**dadurch gekennzeichnet, dass**
die Vorrichtung (100) in dem Drehgelenk des einzigen Lagers (120) frei pendelnd an dem Umfang der Messrolle (200) gelagert ist.

15. Messvorrichtung nach Anspruch 13 oder 14,
**dadurch gekennzeichnet, dass**
die Vorrichtung (100) mit Hilfe der Positionierungseinrichtung (140) an einer Winkelposition a der Drehachse (122) des Drehgelenks (120) in Umfangsrichtung (U) gelagert ist.

16. Messvorrichtung nach einem der Ansprüche 13 bis 15,
**dadurch gekennzeichnet, dass**
das Lager (120), an welchem die Vorrichtung gemäß der Ansprüche 1 bis 7 frei pendelnd aufgehangen ist, in Form von zwei Hälften ausgebildet ist, die an den Einbaustücken der Rolle montiert sind.

17. Verfahren zum Betreiben eines Walzgerüstes nach einem der Ansprüche 8 bis 12 in einem Walzbetrieb oder zum Betreiben einer Messvorrichtung nach einem der Ansprüche 13 bis 16, aufweisend folgende Schritte:

- Vorpositionieren der Vorrichtung nach einem der vorangegangenen Ansprüche 1 bis 7 in einer Winkelposition a am Umfang der Rolle und in einem vorbestimmten radialen Abstand zu der Rolle;
- Einspritzen eines Kühlmediums mit einem vorgegebenen Druck oder Volumenstrom in einen Kühlspalt zwischen der Außenseite der Rolle und der konkav gewölbten Innenseite der Kühlschale; und
- Drehen der Rolle zum Walzen eines Walzgutes während des Walzbetriebes oder zum Transportieren des Walzgutes während des Betriebs der Messrolle;

**gekennzeichnet durch**
während des Einspritzens des Kühlmediums:
Freigeben der Vorrichtung in radialer Richtung (r), sodass
sich die Größe (h) des Kühlspaltes im Bereich des Drehgelenks (120) aufgrund der dortigen freien Verschiebbarkeit der Kühlschale (110) in radialer Richtung in Abhängigkeit der Größe des Druckes oder des Volumenstroms des in den Kühlspalt eingespritzten Kühlmediums selbstständig geeignet einstellt.

18. Verfahren nach Anspruch 17,
   **dadurch gekennzeichnet, dass**
   sich Größe (h) des Kühlspaltes über der gesamten Kühlschale im Sinne eines Kräftegleichgewichtes zwischen der radial nach Innen wirkenden Verteilung der Pendelkraft der Kühlschale, der ebenfalls radial nach Innen wirkenden Verteilung der Saugkraft des Kühlmittelstromes in dem Kühlspalt und einer Verteilung der Reaktio-Widerstandskraft des Kühlmediums geeignet einstellt.

**Claims**

1. Device (100) for cooling a roller (200) comprising:

   a cooling shell (110) with a cross-section in the form of a section of an arc for covering a surface region of the roller (200), wherein a single bearing (120) with a rotary joint having an axis (122) of rotation extending perpendicularly to the arcuate cross-section is constructed in the region of an edge of the cooling shell for pivotation of the cooling shell (110) about the axis of rotation,
   **characterised in that**
   the single bearing (120) has a degree of freedom in radial direction (r) referred to the arcuate cross-section of the cooling shell (110) so that the cooling shell is mounted in the bearing (120) to be freely displaceable in radial direction (r).

2. Device (100) according to claim 1, **characterised in that** the cooling shell (110) is suspended at the rotary joint of the single bearing (120) to be freely pendulating.

3. Device (100) according to one of the preceding claims, **characterised in that** a ballast weight (112) is mounted on the convexly curved outer side of the cooling shell (110), optionally also by way of a lever arm (114) at a spacing from the outer side.

4. Device according to claim 3, **characterised in that** the lever arm (114) and the ballast weight (112) are so constructed and arranged that a desired torque about the axis (122) of the rotary joint is set in co-operation with the mass distribution of the cooling shell (110) when a predetermined deflection of the cooling shell and ballast weight combination out of a pendulation rest position takes place.

5. Device (100) according to any one of the preceding claims, **characterised by** a nozzle device (130) for spraying a cooling medium (400) with a predetermined pressure or volume flow substantially tangentially to the concavely curved inner side of the cooling shell (110).

6. Device (100) according to any one of the preceding claims, **characterised by** a positioning device (140), which acts on the bearing (120), for positioning the bearing with the cooling shell (110), which is mounted thereon to be radially displaceable, at a predetermined position ($\alpha$).

7. Device (100) according to any one of the preceding claims, **characterised in that** the bearing (120) is constructed as a spherical bearing.

8. Roll stand comprising at least one roller in the form of a roll (200) for rolling material (300) to be rolled and a device (100) according to any one of the preceding claims, wherein the cooling shell (110) is mounted at the circumference of the roll (200) in the bearing (120) to be freely displaceable in radial direction (r).

9. Roll stand according to claim 8, **characterised in that** the device (100) is mounted in the rotary joint of the single bearing (120) to be freely pendulating at the circumference of the roll (200).

10. Roll stand according to claim 8 or 9, **characterised in that** the device (100) is mounted with the help of the positioning device (140) at an angular position $\alpha$ of the axis (122) of rotation of the rotary joint (120) in circumferential direction (U).

11. Roll stand according to any one of claims 8 to 10, **characterised in that** the bearing (120) at which the device according to claims 1 to 7 is suspended to be freely pendulating is mounted on the roll stand.

**12.** Roll stand according to any one of claims 8 to 10, **characterised in that** the bearing (120) at which the device according to claims 1 to 7 is suspended to be freely pendulating is constructed in the form of two halves which are mounted on the chocks of the roller.

**13.** Measuring device comprising a roller in the form of a measuring roller, on the surface of which sensors, for example pressure sensors, are arranged for detection of a pressure distribution of planarity distribution in width direction of material which is to be rolled and which partly loops around the measuring roller, and a device according to any one of claims 1 to 7, wherein the cooling shell (110) is mounted at the circumference of the roller (200) in the bearing (120) to be freely displaceable in radial direction (r).

**14.** Measuring device according to claim 13, **characterised in that** the device (100) is mounted in the rotary joint of the single bearing (120) to be freely pendulating at the circumference of the measuring roller (200).

**15.** Measuring device according to claim 13 or 14, **characterised in that** the device (100) is mounted with the help of the positioning device (140) at an angular position $\alpha$ of the axis (122) of rotation of the rotary joint (120) in circumferential direction (U).

**16.** Measuring device according to any one of claim 13 to 15, **characterised in that** the bearing (120) at which the device according to claims 1 to 7 is suspended to be freely pendulating is constructed in the form of two halves which are mounted on the chocks of the roller.

**17.** Method of operating a roll stand according to any one of claims 8 to 12 in a rolling operation or for operating a measuring device according to any one of claims 13 to 16, comprising the following steps:

- pre-positioning the device according to any one of the preceding claims 1 to 7 in an angular position $\alpha$ at the circumference of the roller and at a predetermined radial spacing from the roller;
- spraying a cooling medium with a predetermined pressure or volume flow into a cooling gap between the outer side of the roller and the concavely curved inner side of the cooling shell; and
- rotating the roller for rolling a rolling material during the rolling operation or transporting the rolling material during the operation of the measuring roller;

**characterised by**
during the spraying of the cooling medium:
freeing the device in radial direction (r) so that the size (h) of the cooling gap in the region of the rotary joint (120) automatically suitably sets itself, by virtue of the free displaceability thereat of the cooling shell (110) in radial direction, in dependence on the magnitude of the pressure or the volume flow of the cooling medium sprayed into the cooling gap.

**18.** Method according to claim 17, **characterised in that** the size (h) of the cooling gap over the entire cooling shell suitably sets itself in the sense of a force equilibrium between the radially inwardly acting distribution of the pendulating force of the cooling shell, the similarly radially inwardly acting distribution of the suction force of the coolant flow in the cooling gap and a distribution of the reaction resistance force of the cooling medium.

**Revendications**

**1.** Dispositif (100) pour le refroidissement d'un rouleau (200) présentant :

une enveloppe de refroidissement (110) dont la section transversale se présente sous la forme d'une partie d'un arc de cercle pour le recouvrement d'une zone de la surface du rouleau (200) ; dans lequel, dans la zone d'un bord de l'enveloppe de refroidissement, est réalisé un palier unique (120) comprenant un joint à rotule qui comprend un axe de rotation (122) qui s'étend perpendiculairement à la section transversale en forme d'arc de cercle, pour le pivotement de l'enveloppe de refroidissement (110) autour de l'axe de rotation ;
**caractérisé en ce que**
le palier unique (120) présente un degré de liberté en direction radiale (r), par rapport à la section transversale en forme d'arc de cercle de l'enveloppe de refroidissement (110), d'une manière telle que l'enveloppe de refroidissement est montée dans le palier (120) de manière à pouvoir se déplacer librement en direction radiale (r).

**2.** Dispositif (100) selon la revendication 1, **caractérisé en ce que** l'enveloppe de refroidissement (110) est suspendue en oscillation libre au joint à rotule du palier unique (120).

**3.** Dispositif (100) selon l'une quelconque des revendications précédentes, **caractérisé en ce que**, contre le côté externe de l'enveloppe de refroidissement (110) présentant une courbure de forme convexe - de manière facultative également, via un bras de levier (114), à l'écart du côté externe - est appliqué un poids faisant office de lest (112).

**4.** Dispositif selon la revendication 3, **caractérisé en ce que** le bras de levier (114) et le poids faisant office de lest (112) sont dimensionnés et sont disposés d'une manière telle qu'en collaboration avec la répartition de la masse de l'enveloppe de refroidissement (110) au cours d'une déviation prédéfinie de la combinaison enveloppe de refroidissement-poids faisant office de lest, à partir d'une position de repos du pendule, un couple de rotation désiré autour de l'axe de rotation (122) du joint à rotule se met en place.

**5.** Dispositif (100) selon l'une quelconque des revendications précédentes, **caractérisé par** un mécanisme (130) en forme de buse pour l'introduction par injection d'un milieu de refroidissement (400) avec une pression prédéfinie ou un débit volumétrique prédéfini essentiellement en direction tangentielle contre le côté interne de l'enveloppe de refroidissement (110), présentant une courbure de forme concave.

**6.** Dispositif (100) selon l'une quelconque des revendications précédentes, **caractérisé par** un mécanisme de positionnement (140) qui vient s'appliquer contre le palier (120) pour le positionnement du palier avec l'enveloppe de refroidissement (110) montée en coulissement radial le long de ce dernier, à une position prédéterminée ($\alpha$).

**7.** Dispositif (100) selon l'une quelconque des revendications précédentes, **caractérisé en ce que** le palier (120) est réalisé sous la forme d'un palier sphérique.

**8.** Cage de laminoir présentant :
au moins un rouleau sous la forme d'un cylindre (200) pour le laminage d'un produit à laminer (300) ; et un dispositif (100) selon l'une quelconque des revendications précédentes ; dans lequel l'enveloppe de refroidissement (110) est montée pour pouvoir se déplacer librement contre la périphérie du cylindre (200) dans le palier (120) en direction radiale (r).

**9.** Cage de laminoir selon la revendication 8, **caractérisée en ce que** le dispositif (100) est monté contre la périphérie du cylindre (200) en oscillation libre dans le joint à rotule du palier unique (120).

**10.** Cage de laminoir selon la revendication 8 ou 9, **caractérisée en ce que** le dispositif (100) est monté, à l'aide du mécanisme de positionnement (140), à une position angulaire ($\alpha$) de l'axe de rotation (122) du joint à rotule (120) dans la direction périphérique (U).

**11.** Cage de laminoir selon l'une quelconque des revendications 8 à 10, **caractérisée en ce que** le palier (120), auquel est suspendu en oscillation libre le dispositif selon les revendications 1 à 7, est monté contre la cage de laminoir.

**12.** Cage de laminoir selon l'une quelconque des revendications 8 à 10, **caractérisée en ce que** le palier (120), auquel est suspendu en oscillation libre le dispositif selon les revendications 1 à 7, est réalisé sous la forme de deux moitiés qui sont montées contre les empoises du rouleau.

**13.** Dispositif de mesure comprenant :

un rouleau sous la forme d'un rouleau de mesure à la surface duquel sont disposés des capteurs, par exemple des capteurs de la pression, pour l'enregistrement d'une répartition de pression ou de planéité sur la largeur du produit à laminer qu'encercle en partie le rouleau de mesure ; et
un dispositif selon l'une quelconque des revendications 1 à 7, dans lequel l'enveloppe de refroidissement (110) est montée pour pouvoir se déplacer librement en direction radiale (r) contre la périphérie du cylindre (200) dans le palier (120).

**14.** Dispositif de mesure selon la revendication 13, **caractérisée en ce que** le dispositif (100) est monté dans le joint à rotule du palier unique (120) en oscillation libre contre la périphérie du rouleau de mesure (200).

**15.** Dispositif de mesure selon la revendication 13 ou 14, **caractérisé en ce que** le dispositif (100) est monté, à l'aide du mécanisme de positionnement (140), à une position angulaire ($\alpha$) de l'axe de rotation (122) du joint à rotule (120) dans la direction périphérique (U).

16. Dispositif de mesure selon l'une quelconque des revendications 13 à 15, **caractérisé en ce que** le palier (120), auquel est suspendu en oscillation libre le dispositif selon les revendications 1 à 7, est réalisé sous la forme de deux moitiés qui sont montées contre les empoises du rouleau.

17. Procédé pour la mise en service d'une cage de laminoir selon l'une quelconque des revendications 8 à 12, dans une installation de laminoir ou pour l'exploitation d'un dispositif de mesure selon l'une quelconque des revendications 13 à 16, présentant les étapes suivantes consistant à :

- positionner au préalable le dispositif selon l'une quelconque des revendications précédentes 1 à 7 dans une position angulaire ($\alpha$) à la périphérie du rouleau et à une distance radiale prédéterminée par rapport au rouleau ;
- injecter un milieu de refroidissement avec une pression prédéfinie ou un débit volumétrique prédéfini dans une fente de refroidissement entre le côté externe du rouleau et le côté interne de l'enveloppe de refroidissement, présentant une courbure de forme concave ; et
- mettre le rouleau en rotation pour le laminage d'un produit à laminer au cours du laminage ou pour le transport du produit laminé au cours de l'exploitation du rouleau de mesure ;

**caractérisé par** le fait de, au cours de l'injection du milieu de refroidissement :
libérer le dispositif en direction radiale (r) d'une manière telle que se règle, comme il se doit de manière automatique, la dimension (h) de la fente de refroidissement dans la zone du joint à rotule (120) sur base de la capacité de déplacement libre de l'enveloppe de refroidissement (110) à cet endroit, en direction radiale en fonction de la valeur de la pression ou en fonction du débit volumétrique du milieu de refroidissement introduit par injection dans la fente de refroidissement.

18. Procédé selon la revendication 17, **caractérisé en ce que** la dimension (h) de la fente de refroidissement sur la totalité de l'enveloppe de refroidissement se met en place de manière appropriée, dans le sens d'un équilibre des forces entre la répartition de la force pendulaire de l'enveloppe de refroidissement s'exerçant vers l'intérieur en direction radiale, la répartition de la force d'aspiration du courant de l'agent de refroidissement s'exerçant également vers l'intérieur en direction radiale dans la fente de refroidissement et une répartition de la force de réaction-résistance du milieu de refroidissement.

FIG.1

FIG.2

FIG.3

FIG.4

FIG.5

**IN DER BESCHREIBUNG AUFGEFÜHRTE DOKUMENTE**

**In der Beschreibung aufgeführte Patentdokumente**

- JP 63303609 A
- DE 3616070 C2
- DE 202010202340 A1
- DE 102012219722 A1
- DE 102012216570 A1
- DE 102011104735 A1